# EUROPÄISCHE PATENTSCHRIFT

(11) **EP 0 516 019 B1**
(45) Veröffentlichungstag und Bekanntmachung des Hinweises auf die Patenterteilung: **27.12.1995**
(21) Anmeldenummer: 92108789.6
(22) Anmeldetag: 25.05.1992
(51) Int. Cl.: C08F 4/642, C08F 10/00

(54) **Verfahren zur Herstellung von syndiotaktischen Polyolefinen mit breiter Molmassenverteilung**
Process for preparing syndiotactic polyolefins with large molecular weight distribution
Procédé de préparation de polyoléfines syndiotactiques à grande distribution de poids moléculaire

(30) Priorität: 27.05.1991 DE 4117260
(43) Veröffentlichungstag der Anmeldung: 02.12.1992
(73) Patentinhaber: HOECHST AKTIENGESELLSCHAFT, 65926 Frankfurt am Main (DE)
(72) Erfinder: Winter, Andreas, Dr., W-6246 Glashütten 2 (DE); Dolle, Volker, Dr., W-6233 Kelkheim am Taunus (DE); Spaleck, Walter, Dr., W-6237 Liederbach (DE)

(56) Entgegenhaltungen:
- EP-A- 0 128 045
- EP-A- 0 128 046
- EP-A- 0 226 463
- EP-A- 0 310 734
- EP-A- 0 387 690

## Beschreibung

Von Metallocenkatalysatoren in Verbindung mit Aluminoxanen als Cokatalysatoren ist bekannt, daß bei ihrem Einsatz Olefine zu Polyolefinen mit enger Molmassenverteilung, Mw/Mn von 2-3, polymerisiert werden können (J. Polym. Sci, Pol. Chem. Ed. 23 (1985) 2117, EP-A 302 424).

Solche eng verteilten Polyolefine eignen sich beispielsweise für Anwendungen im Präzisionsspritsguß, Spritzguß allgemein und für die Faserherstellung. Für zahlreiche Anwendungen wie beispielsweise Tiefziehen, Extrudieren, Hohlkörperblasformen sowie für die Herstellung von Polyolefinschäumen und Folien werden breitere oder bimodale Molmassenverteilungen gefordert.

Für Polyethylen wurde vorgeschlagen, solche Produkte durch Verwendung von zwei oder mehr Metallocen-Katalysatoren in der Polymerisation zu realisieren (EP-A-128 045). Die beschriebenen Systeme sind achirale Katalysatoren und würden bei der Polymerisation von Propen ataktisches Polypropylen liefern. Ataktisches Polypropylen ist jedoch als Konstruktionswerkstoff ungeeignet.

Die Herstellung von Stereoblockpolypropylen mit Mw/Mn von 13-15 ist aus DE-OS 36 40 924 bekannt. Die dort beschriebenen Katalysatorsysteme sind ebenfalls nicht geeignet, Polyolefine hoher Taktizität zu bilden. Ferner sind die bei technisch relevanten Polymerisationstemperaturen realisierbaren Molmassen zu niedrig.

In der EP-A 310 734 werden Polymerisationssysteme bestehend aus einer Mischung eines Hafnocens und eines Zirkonocens, die beide chiral und stereorigid sind, zur Herstellung von hochisotaktischem Polypropylen vorgeschlagen. Die erhaltenen Produkte haben breite bis bimodale Verteilungen mit Mw/Mn zwischen 3,7 und 10,3.

Unter Verwendung nur eines Hafnocenkatalysators wird bei einer bestimmten Polymerisationstemperatur gemaß EP-A 355 439 breitverteiltes isotaktisches Polypropylen erhalten.

Syndiotaktisches Polypropylen mit breiter oder bimodaler Verteilung (Mw/Mn > 6,4) wird in der EP-A 387 691 unter Verwendung eines Hafnocenkatalysators hergestellt.

Nachteile dieser Verfahren sind die für industrielle Anwendungen zu hohen Kosten für Hafniumkatalysatoren in Verbindung mit ihrer niedrigen Polymerisationsaktivität, die zusätzlich noch eine umfassende kostenintensive Reinigung des hergestellten Polymeren von Katalysatorresten erforderlich macht.

Es bestand somit die Aufgabe, ein Katalysatorsystem und ein Verfahren zu finden, mittels dessen syndiotaktische Polyolefine mit breiter bis bimodaler Verteilung hergestellt werden können, welche sich für industrielle Anwendungen eignen.

Gelöst wird die Aufgabe durch Verwendung eines Katalysatorsystems bestehend aus mindestens zwei speziellen Zirkonocenen, die stereorigid und prochiral, nicht jedoch zwingend chiral sind, und die C_{S}-Symmetrie oder nur leicht gestörte C_{S}-Symmetrie aufweisen, und einer Aluminiumverbindung als Cokatalysator.

Die Erfindung betrifft somit ein Verfahren zur Herstellung eines syndiotaktischen Polyolefins mit einer Molmassenverteilung Mw/Mn ≧ 3, die monomodal, bimodal oder multimodal sein kann, durch Polymerisation oder Copolymerisation eines Olefins der Formel R^{a}CH = CHR^{b}, worin R^{a} und R^{b} gleich oder verschieden sind und ein Wasserstoffatom oder einen Alkylrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einer Übergangsmetallkomponente (Metallocen) und einem Aluminoxan der Formel II 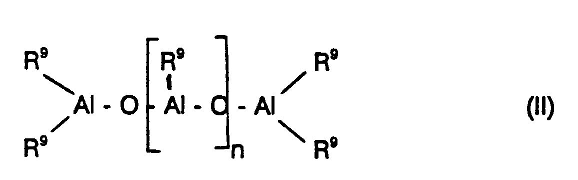
für den linearen Typ und/oder der Formel III 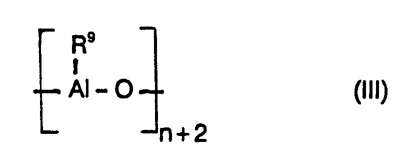
für den cyclischen Typ, wobei in den Formeln II und III die Reste R⁹ gleich oder verschieden sein können und eine C₁-C₆-Alkylgruppe, eine C₁-C₆-Fluoralkylgruppe, eine C₆-C₁₈-Arylgruppe, eine C₆-C₁₈-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung AlR⁹₃ besteht, dadurch gekennzeichnet, daß als Übergangsmetallkomponente mindestens 2 Metallocene der Formel I 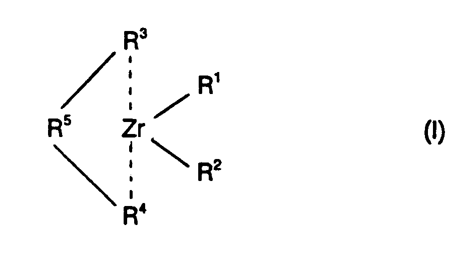
verwendet werden, die stereorigid sind und deren Molekülteil, der durch Zr und die Substituenten R¹-R⁴ gebildet wird, C_{S}-Symmetrie oder leicht gestörte C_{S}-Symmetrie aufweist, wobei R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenygruppe bedeuten,
R³ und R⁴ verschieden sind und einen ein- oder mehrkernigen Kohlenwasserstoffrest, welcher mit dem Zentralatom Zr eine Sandwichstruktur bilden kann, bedeuten,
R⁵ 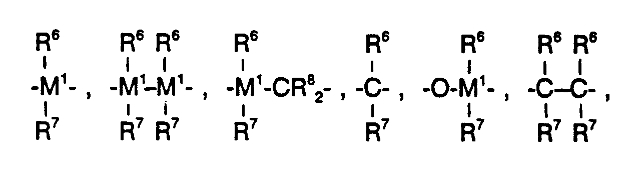
= BR⁶, = AlR⁶, -Ge-, -Sn-, -O-, -S-, = SO, = SO₂, = NR⁶, = CO, = PR⁶ oder = P(O)R⁶ ist, wobei R⁶, R⁷ und R⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁶ und R⁷ oder R⁶ und R⁸ jeweils mit den sie verbindenden Atomen einen Ring bilden, und M¹ Silizium, Germanium oder Zinn ist.

Dabei steht Alkyl für geradkettiges oder verzweigtes Alkyl und Halogen bevorzugt für Fluor oder Chlor, insbesondere für Chlor.

Der Begriff C_{S}-Symmetrie bedeutet für die Zwecke der vorliegenden Erfindung, daß die Metallocene I in dem Molekülteil Zr, R¹-R⁴ senkrecht zur Ebene, die von Zr, R¹ und R² aufgespannt wird, eine Spiegelebene besitzen. Die Winkelhalbierende von ∢ R¹-Zr-R² verläuft in dieser Spiegelebene.

Im Fall der leicht gestörten C_{S}-Symmetrie kann R¹ ungleich R² sein, oder die Reste R³ und/oder R⁴ sind substituiert (wie z.B. Methylcyclopentadienyl).

Bevorzugt sind Metallocene, deren C_{S}-Symmetrie nicht gestört ist.

Dabei ist zu beachten, daß der Begriff C_{S}-Symmetrie und dessen Bedeutungsumfang durch eine formale (idealisierte) Betrachtung des Metallocenmoleküls I bestimmt sind. Das bedeutet, daß Verschiebungen im genannten Molekülteil, z.B. hervorgerufen durch die Brücke R⁶, die sich bei einer vollständigen Strukturaufklärung (Röntgenstrukturanalyse) ergeben würden und bei strenger Betrachtung nicht als C_{S}-symmetrisch bezeichnet werden könnten, für die Zwecke der vorliegenden Erfindung unberücksichtigt bleiben.

Für die Formel I gilt ferner:
R¹ und R² sind gleich oder verschieden, bevorzugt gleich, und bedeuten ein Wasserstoffatom, eine C₁-C₁₀-. vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀, vorzugsweise C₈-C₁₂-Arylalkenylgruppe oder ein Halogenatom, vorzugsweise Chlor,
R³ und R⁴ sind verschieden und bedeuten einen ein- oder mehrkernigen Kohlenwasserstoffrest, welcher mit dem Zentralatom Zr eine Sandwichstruktur bilden kann.

Bevorzugt sind R³ und R⁴ Fluorenyl und Cyclopentadienyl, wobei die Grundkörper noch zusätzliche Substituenten in der Bedeutung von R⁶ tragen können. R⁵ ist eine ein- oder mehrgliedrige Brücke, welche die Reste R³ und R⁴ verknüpft und bedeutet 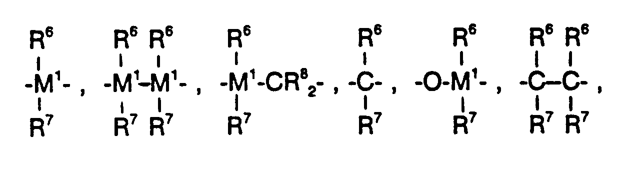
= BR⁶, = AlR⁶, -Ge-, -Sn-, -O-, -S-, = SO, = SO₂, = NR⁶, = CO, = PR⁶ oder = P(O)R⁶ ist, wobei R⁶, R⁷ und R⁸ gleich oder verschieden sind und ein Wasserstoffatom, ein Halogenatom, vorzugsweise Chlor, eine C₁-C₁₀-, vorzugsweise C₁-C₃-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R⁶ und R⁷ oder R⁶ und R⁸ bilden jeweils zusammen mit den sie verbindenden Atomen einen Ring.

M¹ ist Silizium, Germanium oder Zinn, bevorzugt Silizium oder Germanium.
R⁵ ist vorzugsweise = CR⁶R⁷, = SiR⁶R⁷, = GeR⁶R⁷, -O-, -S-, = SO, = PR⁶ oder = P(O)R⁶. Die vorstehend beschriebenen Metallocene können nach folgendem allgemeinen Reaktionsschema hergestellt werden: 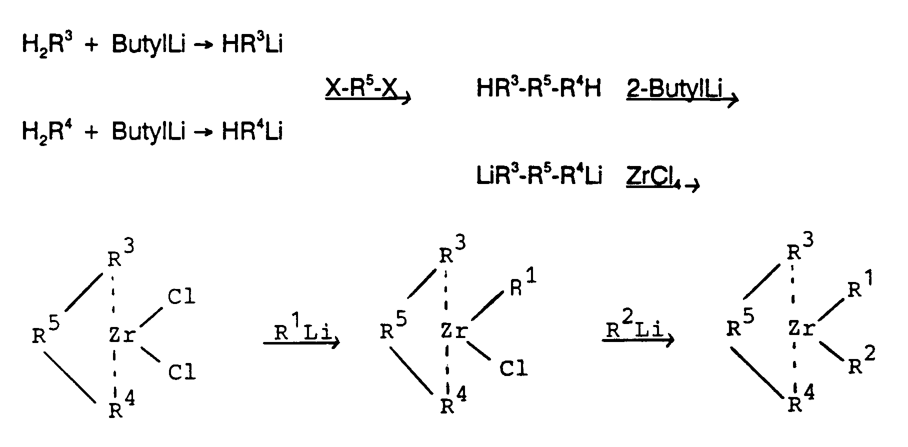
(X = Cl, Br, J, O-Tosyl)
oder
H₂R³ + ButylLi → HR³Li 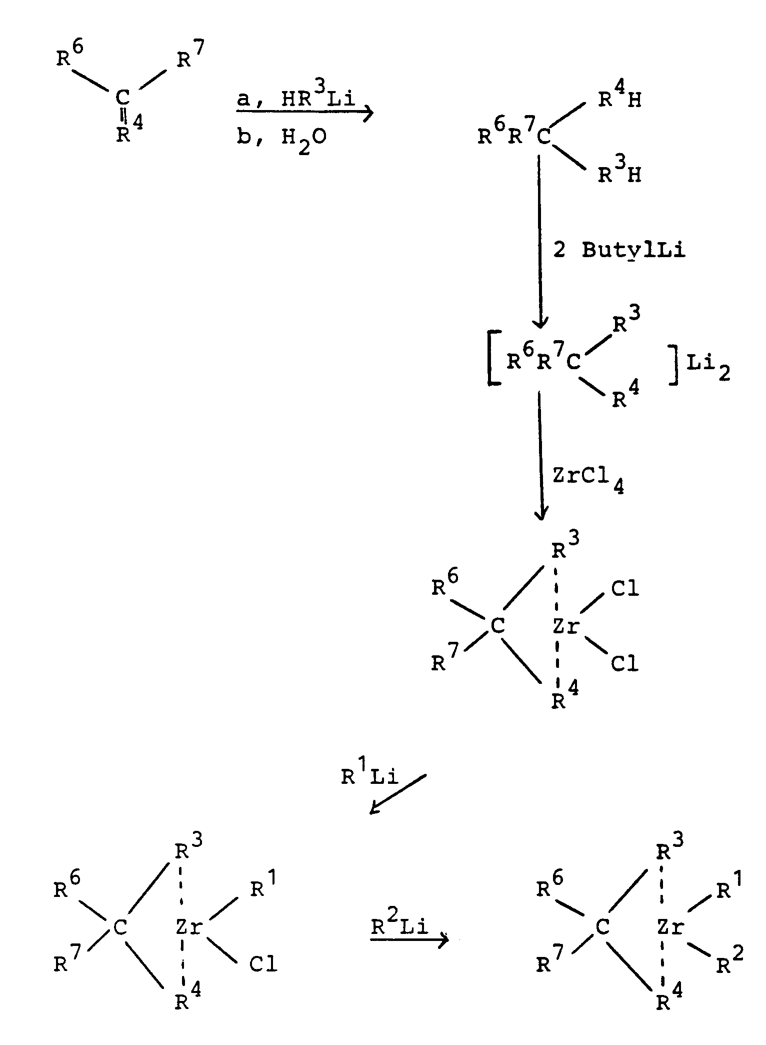
(vgl. Journal of Organometallic Chem. 288 (1985) 63 - 67 und EP-A 320 762).

Die Auswahl der Metallocene für die Polymerisation von Olefinen zu breit- oder mehrmodal verteiltem Polyolefin kann durch jeweils eine Testpolymerisation pro Metallocen erfolgen (vgl. Ausführungsbeispiele). Dabei wird das Olefin zum Polyolefin polymerisiert und dessen mittleres Molekulargewicht Mw sowie dessen Molmassenverteilung Mw/Mn mittels Gelpermeationschromatographie bestimmt. Je nach gewünschter Molmassenverteilung werden dann die Metallocene kombiniert. Unter Einbezug der Polymerisationsaktivitäten ist man z.B. mittels Computersimulation der kombinierten Gelpermeationskurven ohne weiteres in der Lage, über die Art der Metallocene und über das Mengenverhältnis der Metallocene untereinander jede gewünschte Molmassenverteilung zu erzielen.

Die Zahl der erfindungsgemäß zu verwendenden Metallocene I beträgt bevorzugt 2 oder 3, insbesondere 2. Es kann jedoch auch eine große Anzahl (wie z.B. 4 oder 5) eingesetzt werden.

Unter Einbeziehung der Polymerisationsaktivitäten und Molmassen bei unterschiedlichen Polymerisationstemperaturen, in Gegenwart von Wasserstoff als Molmassenregler oder in Gegenwart von Comonomeren, kann das Rechensimulationsmodell noch weiter verfeinert und die Anwendbarkeit des erfindungsgemäßen Verfahrens noch verbessert werden.

Bevorzugt eingesetzte Metallocene sind (Arylalkyliden)(9-fluorenyl)(cyclopentadienyl)zirkondichlorid, (Diarylmethylen)(9-fluorenyl)(cyclopentadienyl)zirkondichlorid und (Dialkylmethylen)(9-fluorenyl)(cyclopentadienyl)zirkondichlorid.

Besonders bevorzugt sind dabei (Methyl(phenyl)methylen)(9-fluorenyl)(cyclopentadienyl)zirkondichlorid sowie (Diphenylmethylen)(9-fluorenyl)(cyclopentadienyl)zirkondichlorid und (Dimethylmethylen)(9-fluorenyl)(cyclopentadienyl)zirkondichlorid.
Als Cokatalysator wird ein Aluminoxan der Formeln II und/oder III verwendet, wobei n eine ganze Zahl von 0 - 50, bevorzugt 10 - 35, bedeutet.

Bevorzugt sind die Reste R⁹ gleich und bedeuten Methyl, Isobutyl, Phenyl oder Benzyl, besonders bevorzugt Methyl.

Sind die Reste R⁹ unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R⁹) enthalten sind.

Statt des Aluminoxans kann auch eine Mischung bestehend aus Aluminoxan und AlR⁹ verwendet werden. Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R⁹ werden entsprechend der gewünschten Zusammensetzung zwei verschiedene Aluminiumtrialkyle (AlR₃ + AlR'₃) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocene vor dem Einsatz in der Polymerisationsreaktion jeweils getrennt oder zusammen als Mischung mit einem Aluminoxan der Formel (II) und/oder (III) vorzuaktivierten. Dadurch wird die Polymerisationsaktivität deutlich erhöht und die Kornmorphologie verbessert.

Die Voraktivierung der Metallocene wird in Lösung vorgenommen. Bevorzugt werden dabei die Metallocene als Feststoff in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol oder ein C₆-C₁₀-Kohlenwasserstoff verwendet.

Die Konzentration des Aluminoxans in der Losung liegt im Bereich von ca. 1 Gew.-% bis zur Sättigungsgrenze, vorzugsweise von 5 bis 30 Gew.-%, jeweils bezogen auf die Gesamtlösung. Die Metallocene können in der gleichen Konzentration eingesetzt werden, vorzugsweise werden sie jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Die Metallocene können auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt der Metallocene mit einer der genannten Verbindungen (vgl. EP-A 277 004).

Zur Entfernung von im Olefin vorhandener Katalysatorgifte ist eine Reinigung mit einem Aluminiumalkyl, beispielsweise AlMe₃ oder AlEt₃ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise 20 bis 80°C, durchgeführt. Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 14 C-Atomen. R^{a} und R^{b} können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere werden Propylen und Ethylen polymerisiert.

Als Molmassenregler wird, falls erforderlich, Wasserstoff zugegeben.

Der Gesamtdruck im Polymerisationssystem beträgt 0,5 bis 100 bar. Bevorzugt ist die Polymerisation in dem technisch besonders interessanten Druckbereich von 5 bis 64 bar.

Dabei werden normalerweise die Metallocene in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan oder die Mischung Aluminoxan/AlR⁹ wird normalerweise in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Decan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die beschriebenen Metallocene im technisch interessanten Temperaturbereich zwischen 20 und 80°C mit hoher Polymerisationsaktivität Polymere mit breiter, bimodaler oder multimodaler Molmassenverteilung, hoher Molmasse, hoher Syndiotaktizität und guter Kornmorphologie erzeugen.

Die erfindungsgemäßen Polymere eignen sich besonders gut zur Herstellung von Folien, insbesondere transparenter Folien, für Tiefziehanwendungen, Polyolefinschäume, Extrusionsanwendungen sowie für die Herstellung transparenter Hohlkörper und für das Hohlkörperblasformen allgemein.

Die nachfolgenden Beispiele sollen die Erfindung näher erläutern.

Es bedeuten:
- VZ =: Viskositätszahl in cm³/g 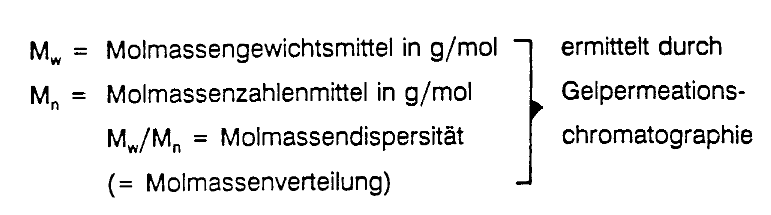
- SI =: Syndiotaktischer Index (SI = rr + 1/2 mr) ermittelt durch ¹³C-NMR-Spektroskopie
- n_{syn} =: syndiotaktische Blocklänge
- MFI (230/5) =: Schmelzindex, gemessen nach DIN 53735; in dg/min

### A. Herstellung von geeigneten Metallocenen

Alle nachfolgenden Arbeitsoperationen der Metallocensynthese wurden unter Schutzgas unter Verwendung absolutierter Lösemittel durchgeführt.

### Beispiel 1

### (Phenyl(methyl)methylen)(9-fluorenyl)(cyclopentadienyl)zirkondichlorid

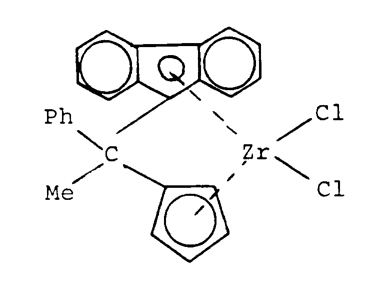

Eine Lösung von 11,4 g (67,8 mmol) 6-Methyl-6-phenyl-fulven in 40 cm³ THF wurde bei Raumtemperatur mit einer Lösung von 67,8 mmol Lithiumfluoren in 50 cm³ THF versetzt. Nach 2 h Rühren bei Raumtemperatur wurden 60 cm³ Wasser zugesetzt. Die dabei ausgefallene Substanz wurde abgesaugt, mit Diethylether gewaschen und im Ölpumpenvakuum getrocknet. Man erhielt 19,1 g (84,2 %) 2,2-Cyclopentadienyl(9-fluorenyl)-ethylbenzol (korrekte Elementaranalysen; ¹H-NMR-Spektrum).

10,0 g (29,9 mmol) der Verbindung wurden in 60 cm³ THF gelöst und bei 0°C mit 26 cm³ (65 mmol) einer 2,5 molaren Hexan-Lösung von n-Butyllithium versetzt. Nach 15 min Rühren wurde das Lösemittel im Vakuum abgezogen. Der verbleibende dunkelrote Rückstand wurde mehrmals mit Hexan gewaschen und im Ölpumpenvakuum getrocknet. Es wurden 15,6 g des roten Dilithiosalzes als THF-Addukt erhalten; es enthielt ca. 30 % THF.

Eine Suspension von 3,48 g (14,9 mmol) ZrCl₄ in 70 cm³ CH₂Cl₂ wurde bei -78°C mit 14,9 mmol des Dilithiosalzes versetzt. Nach dem langsamen Aufwärmen auf Raumtemperatur wurde der Ansatz noch 1 h bei Raumtemperatur gerührt und über eine G4-Fritte filtriert; der Rückstand wurde mehrmals mit CH₂Cl₂ nachgewaschen. Das rote Filtrat wurde vollständig eingeengt und der orangerote Rückstand aus CH₂Cl₂ umkristallisiert. Man erhielt 1,8 g (25 %) Methylphenylmethylen(cyclopentadienyl-9-fluorenyl)zirkondichlorid als rosafarbenes Kristallpulver. ¹H-NMR-Spektrum (100 MHz, CDCl₃): 7,1 - 8,25 (m, Flu-H, Ph-H), 6,90 (m, Ph-H), 6,10-6,50 (m, Ph-H, Cp-H), 5,90, 5,75 (2 x m, Cp-H), 2,55 (s, CH₃).

### Beispiel 2

### Diphenylmethylen(9-fluorenyl)(cyclopentadienyl)zirkondichlorid

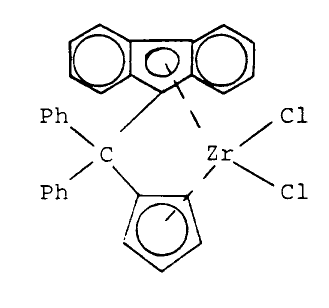

Eine Lösung von 5,10 g (30,7 mmol) Fluoren in 60 cm³ THF wurde bei Raumtemperatur mit 12,3 cm³ (30,7 mmol) einer 2,5 molaren Hexan-Lösung von n-Butyllithium langsam versetzt. Nach 40 min wurde die orange Lösung mit 7,07 g (30,7 mmol) Diphenylfulven versetzt und über Nacht gerührt. Zur dunkelroten Lösung wurden 60 cm³ Wasser zugesetzt, wobei sich die Lösung gelb färbte, und die Lösung wurde ausgeethert. Die über MgSO₄ getrocknete Etherphase wurde eingeengt und bei -35°C der Kristallisation überlassen. Man erhielt 5,1 g (42 %) 1,1-Cyclopentadienyl-(9-fluorenyl)diphenylmethan als beiges Pulver.

2,0 g (5,0 mmol) der Verbindung wurden in 20 cm³ THF gelöst und bei 0°C mit 6,4 cm³ (10 mmol) einer 1,6 molaren Lösung von Butyllithium in Hexan versetzt. Nach 15 min Rühren bei Raumtemperatur wurde das Lösemittel abgezogen, der rote Rückstand im Ölpumpenvakuum getrocknet und mehrmals mit Hexan gewaschen. Nach dem Trocknen im Ölpumpenvakuum wurde das rote Pulver bei -78°C zu einer Suspension von 1,16 g (6,00 mmol) ZrCl₄ gegeben. Nach dem langsamen Aufwärmen wurde der Ansatz noch 2 h bei Raumtemperatur gerührt. Die rosafarbene Suspension wurde über eine G3-Fritte filtriert. Der rosarote Rückstand wurde mit 20 cm³ CH₂Cl₂ gewaschen, im Ölpumpenvakuum getrocknet und mit 120 cm³ Toluol extrahiert. Nach Abziehen des Lösemittels und Trocknen im Ölpumpenvakuum erhielt man 0,55 g des Zirkon-Komplexes in Form eines rosaroten Kristallpulvers.

Das orangerote Filtrat des Reaktionsansatzes wurde eingeengt und bei -35°C der Kristallisation überlassen. Aus CH₂Cl₂ kristallisierten weitere 0,.45 g des Komplexes. Gesamtausbeute 1,0 g (36 %). Korrekte Elementaranalysen. Das Massenspektrum zeigte M* = 556. ¹H-NMR-Spektrum (100 MHz, CDCl₃); 6,90-8,25 (m, 16, Flu-H, Ph-H), 6,40 (m, 2, Ph-H), 6,37 (t, 2, Cp-H), 5,80 (t, 2, Cp-H).

Das Metallocen Dimethylmethylen(fluorenyl)(cyclopentadienyl)zirkondichlorid wurde in Anlehnung an die Literaturstelle J. Am. Chem. Soc. 110 (1988) 6255 hergestellt.

Um gezielt eine gewünschte Molmassenverteilung Mw/Mn (Breite der Molmassenverteilung, monomodal, bimodal oder multimodal) herzustellen, muß das Polymerisationsverhalten der in der Kombination dazu einzusetzenden Metallocene bekannt sein. Dazu wird von jedem der infrage kommenden Metallocene mindestens eine Testpolymerisation durchgeführt.

Die nachfolgenden Beispiele zeigen anhand von drei geeigneten Metallocenen das Vorgehen und die Möglichkeiten der Metallocenkombinationen zur Herstellung der erfindungsgemäßen breiten oder mehrmodalen Molmassenverteilung.

### Testpolymerisationen

### Beispiel 3

Ein trockener 16-dm³-Reaktor wurde mit Stickstoff gespült und mit 10 dm³ flüssigem Propylen befüllt. Dann wurden 30 cm³ toluolische Methylaluminoxanlösung (entsprechend 40 mmol Al, mittlerer Oligomerisierungsgrad des Methylaluminoxans n = 20) zugegeben und der Ansatz wurde 15 Minuten bei 30°C gerührt. Parallel dazu wurden 11,9 mg (0,023 mmol) Diphenylmethylen(9-fluorenyl)(cyclopentadienyl)zirkondichlorid in 15 cm³ toluolischer Methylaluminoxanlösung (20 mmol Al) gelöst. Nach 15 min wurde die Lösung in den Reaktor gegeben und die Polymerisationstemperatur auf 60°C gebracht. Nach einer Polymerisationsdauer von 1 h wurde die Polymerisation beendet. Es wurden 0,95 kg Polypropylen, entsprechend einer Metallocenaktivität von 79,8 kg Polypropylen/g Metallocen x h, erhalten.
VZ = 459 cm³/g; M_{w} = 547 000, Mₙ = 188 000, M_{w}/Mₙ = 2,9, SI = 96,5 %; n_{syn} = 38,4; MFI 230/5 = < 0,1 dg/min.

### Beispiel 4

Verfahren wurde analog zu Beispiel 3, eingesetzt wurden jedoch 13,5 mg (0,027 mmol) Phenyl(methyl)-methylen(9-fluorenyl)(cyclopentadienyl)zirkondichorid.
Erhalten wurden 0,94 kg Polypropylen, entsprechend einer Metallocenaktivität von 69,5 kg Polypropylen/g Metallocen x h.
VZ = 364 cm³/g; M_{w} = 490 000 g/mol; M_{w}/Mₙ = 2,6; SI = 97,0 %; n_{syn} = 40,2; MFI (230/5) = 0,25 dg/min.

### Beispiel 5

Verfahren wurde analog zu Beispiel 3, eingesetzt wurden jedoch 13,9 mg (0,032 mmol) Dimethylmethylen(9-fluorenyl)(cyclopentadienyl)-zirkondichlorid. Nach 2,5 h Polymerisation wurden 2,56 kg Polypropylen, entsprechend einer Metallocenaktivität von 73,7 kg Polypropylen/g Metallocen x h, erhalten. VZ = 125 cm³/g;
M_{w} = 95250 g/mol; M_{w}/Mₙ = 2,1; SI = 94,6 %; MFI (230/5) = 55 dg/min.

Die Beispiele 3 bis 5 zeigen, daß beispielsweise durch Variation des Restes R⁵ in Formel I 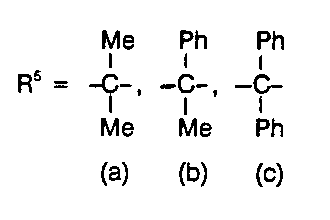
Polymere mit niedriger (a), mittlerer (b) und hoher (c) Molmasse hergestellt werden können. Andere Modifikationen der Metallocenligandsphäre der Verbindungen der Formel I führen zu vergleichbaren Abstufungen. Die erfindungsgemäßen Kombinationen solcher Metallocene führen zu Produkten mit den erfindungsgemäßen breiten und mehrmodalen Molmassenverteilungen und werden in den folgenden Beispielen naher erläutert.

Herstellung von Polymeren mit breiter und/oder bimodaler Molmassenverteilung

### Beispiel 6

Verfahren wurde analog zu Beispiel 3, als Metallocenkomponente wurde jedoch eine Mischung aus 11,9 mg (0,023 mmol) Diphenylmethylen(9-fluorenyl)(cyclopentadienyl)zirkondichlorid und 12,9 mg (0,030 mmol) Dimethylmethylen(9-fluorenyl)(cyclopentadienyl)zirkondichlorid in 15 cm³ der toluolischen Methylaluminoxanlösung aufgelöst.
Erhalten wurden 2,05 kg Polypropylen entsprechend einer Metallocengemischaktivität von 82,7 kg PP/g Metallocengemisch x h.
VZ = 291 cm³/g; M_{w} = 215 500 g/mol, M_{w}/Mₙ = 5,0 bimodal; SI = 96,1 %.

### Beispiel 7

Beispiel 6 wurde wiederholt, verwendet wurden jedoch 11,9 mg (0,023 mmol) und 6,5 mg (0,015 mmol) der Metallocene. Erhalten wurden 1,35 kg Polypropylen entsprechend 73,0 kg PP/g Metallocengemisch x h. VZ = 353 cm³/g;
M_{w} = 285 500 g/mol, M_{w}/Mₙ = 5,4 bimodal; SI = 96,8 %.

### Beispiel 8

Beispiel 6 wurde wiederholt, verwendet wurden jedoch 6,0 mg (0,011 mmol) und 12,9 mg (0,030 mmol) der Metallocene. Erhalten wurden 1,35 kg Polypropylen entsprechend 71,4 kg PP/g Metallocengemisch x h. VZ = 226 cm³/g;
M_{w} = 168 500 g/mol, M_{w}/Mₙ = 4,7, bimodal; SI = 96,0 %.

### Beispiel 9

Beispiel 6 wurde wiederholt, verwendet wurden jedoch 20,0 mg (0,036 mmol) und 4,4 mg (0,010 mmol) der Metallocene. Erhalten wurden 1,87 kg Polypropylen, entsprechend 76,6 kg PP/g Metallocengemisch x h. VZ = 423 cm³/g;
M_{w} = 327 000 g/mol, M_{w}/Mₙ = 5,9, SI = 96,6 %.

### Beispiel 10

Beispiel 6 wurde wiederholt, verwendet wurden jedoch 4,0 mg (0,007 mmol) und 16,3 mg (0,038 mmol) der Metallocene. Erhalten wurden 1,45 kg Polypropylen, entsprechend 71,4 kg PP/g Metallocengemisch x h. VZ = 167 cm³/g;
M_{w} = 110 000 g/mol, M_{w}/Mₙ = 4,0; SI = 95,9 %.

### Beispiel 11

Ein trockener 150-dm³-Reaktor wurde mit Stickstoff gespült und bei 20°C mit 80 dm³ eines entaromatisierten Benzinschnittes mit dem Siedebereich 100-120°C gefüllt. Dann wurde der Gasraum durch 5-maliges Aufdrücken von 2 bar Propylen und Entspannen stickstofffrei gespült.

Nach Zugabe von 50 l flüssigem Propylen wurden 320 cm³ toluolische Methylaluminoxanlösung (entsprechend 500 mmol Al, Molmasse nach kryoskopischer Bestimmung 1180 g/mol) zugegeben und der Reaktorinhalt auf 40°C aufgeheizt. Durch Zudosierung von Wasserstoff wurde ein Wasserstoffgehalt im Gasraum des Reaktors von 0,1 Vol.-% eingestellt und später dann durch Nachdosierung während der gesamtem Polymerisationszeit gehalten (on-line Gaschromatographie).
19,1 mg (0,039 mmol) Phenyl(Methyl)methylen(9-fluorenyl)(cyclopentadienyl)zirkondichlorid und 21,5 mg (0,039 mmol) Diphenylmethylen(9-fluorenyl)-(cyclopentadienyl)zirkondichlorid wurden gemischt und der Feststoff in 96 ml toluolischer Methylaluminoxanlösung (entsprechend 150 mmol Al) gelöst und nach 15 Minuten in den Reaktor gegeben. Durch Kühlung wurde das Polymerisationssystem 5 h bei 40°C gehalten. Die Polymerisation wurde durch Zugabe von 2 bar CO₂-Gas gestoppt und das gebildete Polymer auf einer Drucknutsche vom Suspensionsmedium abgetrennt.
Die Trocknung des Produktes erfolgte 24 h bei 80°C/200 mbar.
Es wurden 15,3 kg Polymerpulver, entsprechend einer Aktivität des Metallocengemisches von 75,2 kg PP/g Metallocengemisch x h, erhalten.
VZ = 523 cm³/g; M_{w} = 368 000 g/mol; M_{w}/Mₙ = 4,2 bimodal; SI = 97,4 %.

### Beispiel 12

Beispiel 11 wurde wiederholt, die Metalloceneinwaagen betrugen jedoch 19,1 mg (0,039 mmol) und 11,0 mg (0,020 mmol), die Polymerisationstemperatur betrug 37°C. Es wurden 9,7 kg Polymerpulver, entsprechend einer Aktivität von 64,5 kg PP/g Metalocengemisch x h, erhalten.
VZ = 428 cm³/g; M_{w} = 326 000 g/mol; M_{w}/Mₙ = 3,4; SI = 97,2 %.

### Beispiel 13

Beispiel 11 wurde wiederholt, die Metalloceneinwaagen betrugen jedoch 6,0 mg (0,012 mmol) und 12,4 mg (0,022 mmol) und die Polymerisationszeit war 7,5 h. Es wurden 9,5 kg Polymerpulver, entsprechend einer Aktivität von 68,8 kg PP/g Metallocengemisch x h, erhalten.
VZ = 618 cm³/g; M_{w} = 457 000 g/mol; M_{w}/Mₙ = 3,4 bimodal; SI = 97,0 %.

### Beispiel 14

Beispiel 11 wurde wiederholt, die Metalloceneinwaagen betrugen jedoch 20,0 mg (0,040 mmol) und 4,8 mg (0,009 mmol). Die Polymerisationstemperatur betrug 35°C. Es wurden 8,85 kg Polymerpulver, entsprechend einer Aktivität von 71,4 kg PP/g Metallocengemisch x h, erhalten.
VZ = 321 cm³/g; M_{w} = 223 500 g/mol; M_{w}/Mₙ = 3,1; SI = 96,5 %.

### Beispiel 15

Beispiel 11 wurde wiederholt, die Metalloceneinwaagen betrugen jedoch 7,9 mg (0,016 mmol) und 44,3 mg (0,080 mmol). Es wurde kein Wasserstoff verwendet, die Polymerisationstemperatur betrug 44°C. Es wurden 16,7 kg Polymerpulver, entsprechend einer Aktivität von 63,9 kg PP/g Metallocengemisch x h, erhalten.
VZ = 766 cm³/g; M_{w} = 537 000 g/mol; M_{w}/Mₙ = 3,4; SI = 97,0 %.

### Beispiel 16

Ein trockener 24-dm³-Reaktor wurde mit Stickstoff gespült und mit 12 dm³ flüssigem Propylen sowie mit 35 cm³ toluolischer Methylaluminoxanlösung (entsprechend 52 mmol Al, mittlerer Oligomerisierungsgrad n = 18) beschickt. Der Inhalt wurde bei 30°C 30 Minuten gerührt. Parallel dazu wurden 6,0 mg (0,011 mmol) Diphenylmethylen(9-fluorenyl)(cyclopentadienyl)-zirkondichlorid, 5,0 mg (0,010 mmol) Phenyl(methyl)methylen(9-fluorenyl)(cyclopentadienyl)-zirkondichlorid und 6,0 mg (0,014 mmol) Dimethylmethylen(9-fluorenyl)(cyclopentadienyl)zirkondichlorid als Feststoffgemisch in 13,5 cm³ toluolischer Methylaluminoxanlösung (20 mmol Al) gelöst. Nach 30 Minuten wurde die violettrote Lösung in den Reaktor gegeben, das Polymerisationssystem durch Wärmezufuhr in 5 Minuten auf 60°C gebracht und 2 h bei dieser Temperatur gehalten.
Gestoppt wurde die Polymerisation durch die Zugabe von 1 Mol CO₂-Gas.
Es wurden 2,3 kg Polymerprodukt erhalten. Die Aktivität betrug somit 67,6 kg PP/g Metallocengemisch x h.
VZ = 272 cm³/g; M_{w} = 212 500 g/mol; M_{w}/Mₙ = 3,6; SI = 96,8 %.

### Beispiel 17

Beispiel 16 wurde wiederholt, neben Propylen und Methylaluminoxanlösung wurden zusätzlich jedoch noch 10 Ndm³ Wasserstoff und 100 g Ethylen in den Reaktor eindosiert. Die Polymerisationstemperatur betrug 50°C. Unter diesen Polymerisationsbedingungen wurden 2,10 kg Polymerprodukt, entsprechend einer Aktivität von 61,8 kg PP/g Metallocengemisch x h, erhalten.
VZ = 330 cm³/g; M_{w} = 205 500 g/mol; M_{w}/Mₙ = 3,9; 4,3 % Ethylengehalt, SI = 96,0 %.

### Beispiel 18

Ein trockener 16-dm³-Reaktor wurde mit Stickstoff gespült und mit 10 dm³ flüssigem Propylen sowie mit 30 cm³ toluolischer Methylaluminoxanlösung (entsprechend 40 mmol Al, mittlerer Oligomerisierungsgrad des Methylaluminoxans war n = 20) beschickt. Der Inhalt wurde bei 30°C 10 Minuten gerührt.
Parallel dazu wurden 8,3 mg (0,015 mmol) Diphenylmethylen(9-fluorenyl)(cyclopentadienyl)zirkondichlorid und 7,4 mg (0,015 mmol) Phenyl(methyl)methylen(9-fluorenyl)(cyclopentadienyl)zirkondichlorid in 15 cm³ toluolischer Methylaluminoxanlösung (20 mmol Al) gelöst und nach 10 Minuten in den Reaktor eindosiert. Die Polymerisationstemperatur wurde 6,5 h bei 45°C gehalten. Gestoppt wurde die Polymerisation durch schnelles Abgasen von überschüssigem Propylen. Es wurden 1,95 kg Polymerprodukt erhalten, die Polymeristionsaktivität betrug somit 19,1 kg PP/g Metallocengemisch x h.
VZ = 556 cm³/g; M_{w} = 427 500 g/mol; M_{w}/Mₙ = 3,9; SI = 97,6 %.

### Beispiel 19

Ein trockener 16-dm³-Reaktor wurde mit Stickstoff gespült und mit 24 Ndm³ (entsprechend 1,5 bar) Wasserstoff, 10 dm³ flüssigem Propylen sowie mit 30 cm³ toluolischer Methylaluminoxanlösung (entsprechend 40 mmol Al, mittlerer Oligomerisierungsgrad des Methylaluminoxans war n = 20) beschickt. Der Inhalt wurde bei 30°C 15 Minuten gerührt. Parallel dazu wurden 8,0 mg (0,014 mmol) Diphenylmethylen(9-fluorenyl)(cyclopentadienyl)zirkondichlorid und 8,0 mg (0,016 mmol) Phenyl(methyl)methylen-(9-fluorenyl)(cyclopentadienyl)zirkondichlorid in 7,5 cm³ toluolischer Methylaluminoxanlösung (10 mmol Al) gelöst und nach 15 Minuten in den Reaktor eindosiert. Die Polymerisationstemperatur wurde auf 60°C eingestellt und 1 h durch Kühlung gehalten.
Es wurden 1,30 kg Polymerprodukt, entsprechend einer Aktivität von 81,3 kg PP/g Metallocengemisch x h, erhalten.
VZ = 169 cm³/g; M_{w} = 116 800 g/mol; M_{w}/Mₙ = 3,0; SI = 96,8 %.

### Beispiel 20

Es wurde verfahren wie in Beispiel 19, verwendet wurden jedoch 40 Ndm³ (2,5 bar) Wasserstoff und das Metallocengemisch bestand aus 8,0 mg (0,014 mmol) Diphenylmethylen-(9-fluorenyl)(cyclopentadienyl)zirkondichlorid und 9,0 mg (0,021 mmol) Dimethylmethylen(9-fluorenyl)(cyclopentadienyl)zirkondichlorid. Die Polymerisationstemperatur war 70°C. Es wurden 3,23 kg Polymerprodukt, entsprechend einer Aktivität von 190,5 kg PP/g Metallocengemisch x h, erhalten.
VZ = 105 cm³/g; M_{w} = 68 600 g/mol; M_{w}/Mₙ = 3,0; SI = 96,0 %.

### Beispiel 21

Es wurde verfahren wie in Beispiel 20, es wurden jedoch nur 16 Ndm³ (1 bar) Wasserstoff verwendet, und die Polymerisationstemperatur betrug 65°C.
Es wurden 2,54 kg Polymerprodukt, entsprechend einer Aktivität von 149,4 kg PP/g Metallocengemisch x h, erhalten.
VZ = 182 cm³/g; M_{w} = 128 500 g/mol; M_{w}/Mₙ = 3,4; SI = 96,5 %.

### Beispiel 22

Es wurde verfahren wie in Beispiel 19, es wurden jedoch nur 16 Ndm³ (1 bar) Wasserstoff verwendet. Statt 30 cm³ toluolischer Methylaluminoxanlösung wurden 20 mmol Trimethylaluminium (als 20 Gew.-%ige Lösung in Toluol) in den Kessel gegeben, und die Polymerisationstemperatur betrug 55°C, Polymerisationsdauer 3h. Es wurden 1,43 kg Polymerprodukt, entsprechend einer Aktivität von 29,7 kg PP/g Metallocengemisch x h, erhalten.
VZ = 184 cm³/g; M_{w} = 130 500 g/mol; M_{w}/Mₙ = 3,2; SI = 97,1 %.

## Patentansprüche

1. Verfahren zur Herstellung eines syndiotaktischen Polyolefins mit einer Molmassenverteilung Mw/Mn ≧ 3, die monomodal, bimodal oder multimodal sein kann, durch Polymerisation oder Copolymerisation eines Olefins der Formel R^{a}CH = CHR^{b}, worin R^{a} und R^{b} gleich oder verschieden sind und ein Wasserstoffatom oder einen Alkylrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einer Übergangsmetallkomponente (Metallocen) und einem Aluminoxan der Formel II 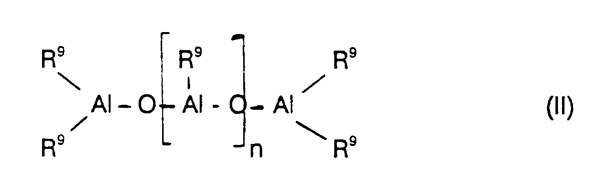 für den linearen Typ und/oder der Formel III 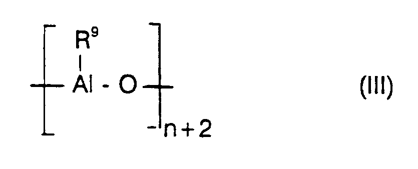 für den cyclischen Typ, wobei in den Formeln II und III die Reste R⁹ gleich oder verschieden sein können und eine C₁-C₆-Alkylgruppe, eine C₁-C₆-Fluoralkylgruppe, eine C₆-C₁₈-Arylgruppe, eine C₆-C₁₈-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung AlR⁹₃ besteht, dadurch gekennzeichnet, daß als Übergangsmetallkomponente mindestens 2 Metallocene der Formel I 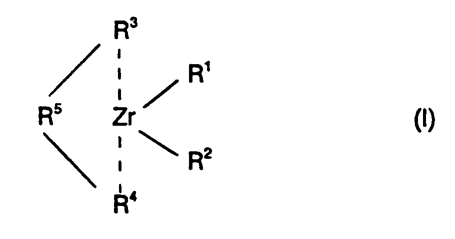 verwendet werden, die stereorigid sind und deren Molekülteil, der durch Zr und die Substituenten R¹-R⁴ gebildet wird, C_{S}-Symmetrie oder leicht gestörte C_{S}-Symmetrie aufweist, wobei
R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³ und R⁴ verschieden sind und einen ein- oder mehrkernigen Kohlenwasserstoffrest, welcher mit dem Zentralatom Zr eine Sandwichstruktur bilden kann, bedeuten,
R⁵ 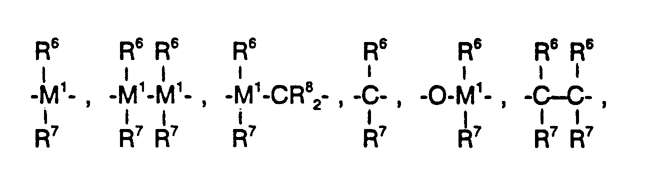 = BR⁶, = AlR⁶, -Ge-, -Sn-, -O-, -S-, = SO, = SO₂, = NR⁶, = CO, = PR⁶ oder = P(O)R⁶ ist, wobei R⁶, R⁷ und R⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁶ und R⁷ oder R⁶ und R⁸ jeweils mit den sie verbindenden Atomen einen Ring bilden, und M¹ Silizium, Germanium oder Zinn ist.

2. Verfahren gemäß Anspruch 1, dadurch gekennzeichnet, daß in Formel I die Substituenten R¹ und R² Chlor bedeuten.

3. Verfahren gemäß Anspruch 1 oder 2, dadurch gekennzeichnet, daß als Metallocene der Formel I (Arylalkyliden)(9-fluorenyl)(cyclopentadienyl)zirkondichlorid, (Diarylmethylen)(9-fluorenyl)(cyclopentadienyl)-zirkondichlorid und/oder (Dialkylmethylen)(9-fluorenyl)(cyclopentadienyl)-zirkondichlorid verwendet werden.

4. Verfahren gemäß einem oder mehreren der Ansprüche 1 bis 3, dadurch gekennzeichnet, daß als Metallocene der Formel I
(Methyl(phenyl)methylen)(9-fluorenyl)(cyclopentadienyl)zirkondichlorid, (Diphenylmethylen)(9-fluorenyl)(cyclopentadienyl)zirkondichlorid und/oder (Dimethylmethylen)(9-fluorenyl)(cyclopentadienyl)zirkondichlorid verwendet werden.

5. Verfahren gemäß einem oder mehreren der Ansprüche 1 bis 4, dadurch gekennzeichnet, daß Propylen polymerisiert wird.

6. Katalysator, welcher aus einer Übergangsmetallkomponente (Metallocen) und einem Aluminoxan der Formel II 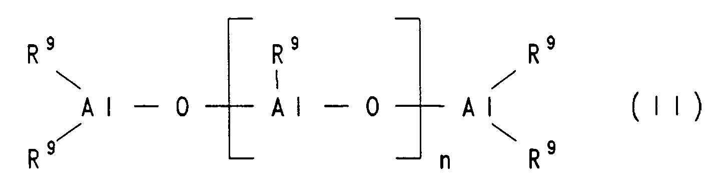 für den linearen Typ und/oder der Formel III 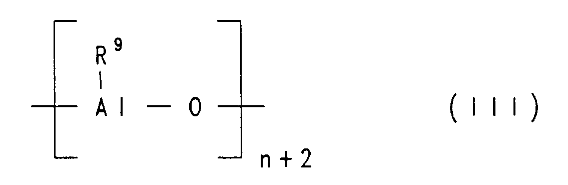 für den cyclischen Typ, wobei in den Formeln II und III die Reste R⁹ gleich oder verschieden sein können und eine C₁-C₆-Alkylgruppe, eine C₁-C₆-Fluoralkylgruppe, eine C₆-C₁₈-Arylgruppe, eine C₆-C₁₈-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung AlR⁹₃ besteht, oder anstelle oder neben einem Aluminoxan eine salzartige Verbindung der Formel RₓNH₄₋ₓBR'₄ oder der Formel R₃PHBR'₄ enthält worin x = 1, 2 oder 3 ist, R = Alkyl oder Aryl, gleich oder verschieden sind, und R' = Aryl bedeutet, das auch fluoriert oder teilfluoriert sein kann, dadurch gekennzeichnet, daß die Übergangsmetallkomponente mindestens 2 Metallocene der Formel I 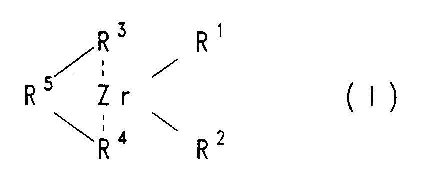 enthält, die stereorigid sind und deren Molekülteil, der durch Zr und die Substituenten R¹-R⁴ gebildet wird, C_{S}-Symmetrie oder leicht gestörte C_{S}-Symmetrie aufweist, wobei
R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³ und R⁴ verschieden sind und einen ein- oder mehrkernigen Kohlenwasserstoffrest, welcher mit dem Zentralatom Zr eine Sandwichstruktur bilden kann, bedeuten,
R⁵ 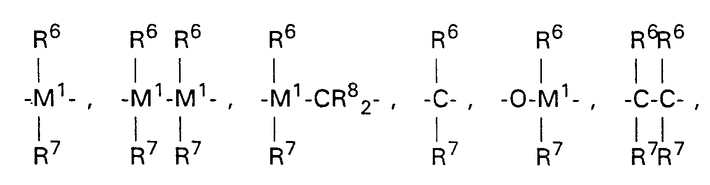 = BR⁶, = AlR⁶, -Ge-, -Sn-, -O-, -S-, = SO, = SO₂, = NR⁶, = CO, = PR⁶ oder = P(O)R⁶ ist, wobei R⁶, R⁷ und R⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁶ und R⁷ oder R⁶ und R⁸ jeweils mit den sie verbindenden Atomen einen Ring bilden, und M¹ Silizium, Germanium oder Zinn ist.

7. Katalysator gemäß Anspruch 6, dadurch gekennzeichnet, daß in Formel I die Substituenten R¹ und R² Chlor bedeuten.

8. Katalysator gemäß Anspruch 6 oder 7, dadurch gekennzeichnet, daß als Metallocene der Formel I (Arylalkyliden)(9-fluorenyl)(cyclopentadienyl)zirkondichlorid, (Diarylmethylen)(9-fluorenyl)(cyclopentadienyl)zirkondichlorid und/oder (Dialkylmethylen)(9-fluorenyl)(cyclopentadienyl)zirkondichlorid enthalten sind.

9. Katalysator gemäß einem oder mehreren der Ansprüche 6 bis 8, dadurch gekennzeichnet, daß als Metallocene der Formel I
(Methyl(phenyl)methylen)(9-fluorenyl)(cyclopentadienyl)zirkondichlorid, (Diphenylmethylen)(9-fluorenyl)(cyclopentadienyl)zirkondichlorid und/oder (Dimethylmethylen)(9-fluorenyl)(cyclopentadienyl)zirkondichlorid enthalten sind.

## Claims

1. A process for the preparation of a syndiotactic polyolefin which has a molecular weight distribution M_{w}/Mₙ of ≧ 3 and which may be monomodal, bimodal or multimodal, by polymerization or copolymerization of an olefin of the formula R^{a}CH=CHR^{b} in which R^{a} and R^{b} are identical or different and are hydrogen atoms or alkyl radicals having 1 to 14 carbon atoms, or R^{a} and R^{b}, together with the atoms connecting them, can form a ring, at a temperature of from -60 to 200°C, at a pressure of from 0.5 to 100 bar, in solution, in suspension or in the gas phase, in the presence of a catalyst consisting of a transition-metal component (metallocene) and an aluminoxane of the formula II 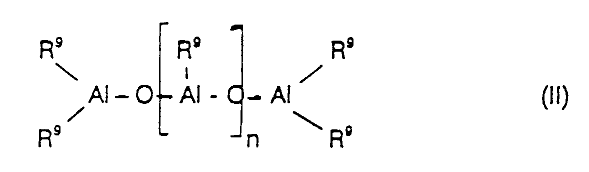 for the linear type and/or of the formula III 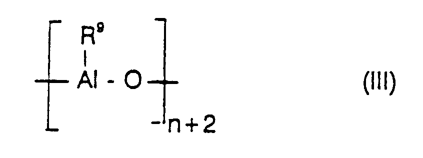 for the cyclic type, where, in the formulae II and III, the-radicals R⁹ may be identical or different and are C₁-C₆-alkyl groups, C₁-C₆-fluoroalkyl groups, C₆-C₁₈-aryl groups, C₆-C₁₈-fluoroaryl groups or hydrogen, and n is an integer from 0 to 50, or, instead of the aluminoxane, a mixture of an aluminoxane of the formula II and/or of the formula III with a compound AlR⁹₃, which comprises using, as the transition-metal component, at least 2 metallocenes of the formula I 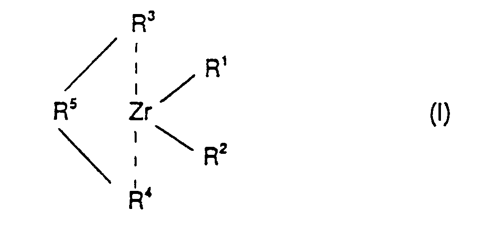 which are stereorigid and whose moiety formed by Zr and the substituents R¹-R⁴ has C_{S} symmetry or slightly distorted C_{S} symmetry, and in which R¹ and R² are identical or different and are hydrogen atoms, halogen atoms, C₁-C₁₀-alkyl groups, C₁-C₁₀- alkoxy groups, C₆-C₁₀-aryl groups, C₆-C₁₀-aryloxy groups, C₂-C₁₀-alkenyl groups, C₇-C₄₀-arylalkyl groups, C₇-C₄₀-alkylaryl groups or C₈-C₄₀-arylalkenyl groups,
R³ and R⁴ are different and are monocyclic or polycyclic hydrocarbon radicals which can form a sandwich structure together with the central atom Zr,
R⁵ is 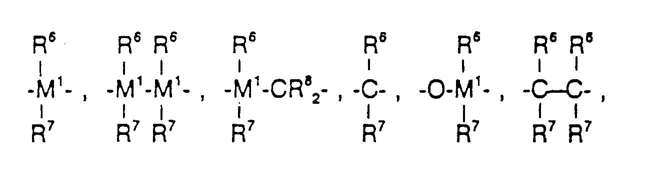 =BR⁶, =AlR⁶, -Ge-, -Sn-, -O-, -S-, =SO, =SO₂, =NR⁶, =CO, =PR⁶ or =P(O)R⁶, where R⁶, R⁷ and R⁸ are identical or different and are hydrogen atoms, halogen atoms, C₁-C₁₀-alkyl groups, C₁-C₁₀-fluoroalkyl groups, C₆-C₁₀-fluoroaryl groups, C₆-C₁₀-aryl groups, C₁-C₁₀-alkoxy groups, C₂-C₁₀-alkenyl groups, C₇-C₄₀-arylalkyl groups, C₈-C₄₀-arylalkenyl groups or C₇-C₄₀-alkylaryl groups, or R⁶ and R⁷ or R⁶ and R⁸, together with the atoms connecting them, in each case form a ring, and M¹ is silicon, germanium or tin.

2. The process as claimed in claim 1, wherein, in the formula I, the substituents R¹ and R² are chlorine.

3. The process as claimed in claim 1 or 2, wherein the metallocenes of the formula I are (arylalkylidene)(9-fluorenyl)(cyclopentadienyl)zirconium dichloride, (diarylmethylene)(9-fluorenyl)(cyclopentadienyl)zirconium dichloride and/or (dialkylmethylene) (9-fluorenyl)(cyclopentadienyl)zirconium dichloride.

4. The process as claimed in one or more of claims 1 to 3, wherein the metallocenes of the formula I are (methyl(phenyl)methylene) (9-fluorenyl) (cyclopentadienyl)zirconium dichloride, (diphenylmethylene) (9-fluorenyl) (cyclopentadienyl)zirconium dichloride and/or (dimethylmethylene) (9-fluorenyl)(cyclopentadienyl)zirconium dichloride.

5. The process as claimed in one or more of claims 1 to 4, wherein propylene is polymerized.

6. A catalyst consisting of a transition-metal component (metallocene) and an aluminoxane of the formula II 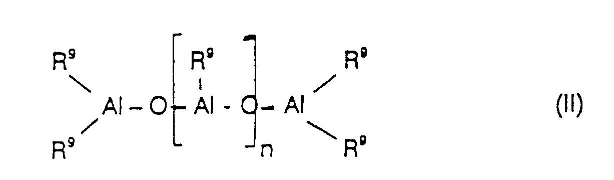 for the linear type and/or of the formula III 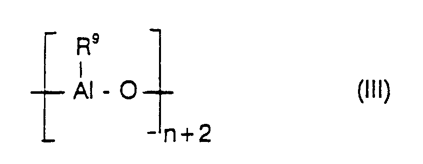 for the cyclic type, where, in the formulae II and III, the radicals R⁹ may be identical or different and are C₁-C₆-alkyl groups, C₁-C₆-fluoroalkyl groups, C₆-C₁₈-aryl groups, C₆-C₁₈-fluoroaryl groups or hydrogen, and n is an integer from 0 to 50, or, instead of the aluminoxane, comprises a mixture of an aluminoxane of the formula II and/or of the formula III with a compound AlR⁹₃, or, instead of or in addition to an aluminoxane, a salt-like compound of the formula RₓNH₄₋ₓBR'₄ or of the formula R₃PHBR'₄, where x = 1, 2 or 3, R = alkyl or aryl and are identical or different, and R' = aryl which may also be fluorinated or partially fluorinated, wherein the transition-metal component contains at least 2 metallocenes of the formula I 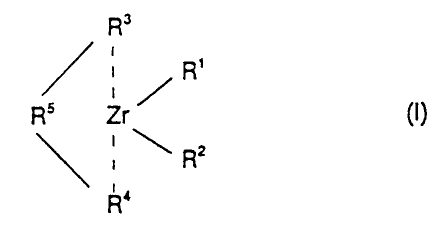 which are stereorigid and whose moiety formed by Zr and the - substituents R¹-R⁴ has C_{S} symmetry or slightly distorted C_{S} symmetry, and in which R¹ and R² are identical or different and are hydrogen atoms, halogen atoms, C₁-C₁₀-alkyl groups, C₁-C₁₀-alkoxy groups, C₆-C₁₀-aryl groups, C₆-C₁₀-aryloxy groups, C₂-C₁₀-alkenyl groups, C₇-C₄₀-arylalkyl groups, C₇-C₄₀-alkylaryl groups or C₈-C₄₀-arylalkenyl groups,
R³ and R⁴ are different and are monocyclic or polycyclic hydrocarbon radicals which can form a sandwich structure together with the central atom Zr,
R⁵ is 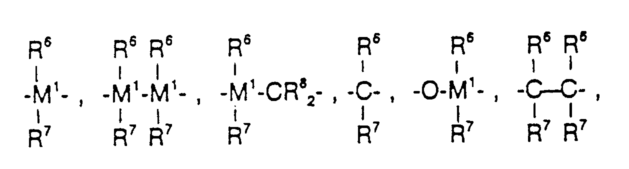 =BR⁶, =AlR⁶, -Ge-, -Sn-, -O-, -S-, =SO, =SO₂, =NR⁶, =CO, =PR⁶ or =P(O)R⁶, where R⁶, R⁷ and R⁸ are identical or different and are hydrogen atoms, halogen atoms, C₁-C₁₀-alkyl groups, C₁-C₁₀-fluoroalkyl groups, C₆-C₁₀-fluoroaryl groups, C₆-C₁₀-aryl groups, C₁-C₁₀-alkoxy groups, C₂-C₁₀-alkenyl groups, C₇-C₄₀-arylalkyl groups, C₈-C₄₀-arylalkenyl groups or C₇-C₄₀-alkylaryl groups, or R⁶ and R⁷ or R⁶ and R⁸, together with the atoms connecting them, in each case form a ring, and M¹ is silicon, germanium or tin.

7. A catalyst as claimed in claim 6, wherein, in the formula I, the substituents R¹ and R² are chlorine.

8. A catalyst as claimed in claim 6 or 7, wherein the metallocenes of the formula I are (arylalkylidene)(9-fluorenyl)(cyclopentadienyl)zirconium dichloride, (diarylmethylene)(9-fluorenyl)(cyclopentadienyl)zirconium dichloride and/or (dialkylmethylene)(9-fluorenyl)(cyclopentadienyl)zirconium dichloride.

9. A catalyst as claimed in one or more of claims 6 to 8, wherein the metallocenes of the formula I are (methyl(phenyl)methylene)(9-fluorenyl)(cyclopentadienyl)zirconium dichloride, (diphenylmethylene)(9-fluorenyl)(cyclopentadienyl)zirconium dichloride and/or (dimethylmethylene)(9-fluorenyl)(cyclopentadienyl)zirconium dichloride.

## Revendications

1. Procédé pour préparer une polyoléfine syndiotactique ayant une répartition de poids moléculaire Mw/Mn ≧3, qui peut être monomodale, bimodale ou multimodale, par polymérisation ou copolymérisation d'une oléfine de formule R^{a}CH = CHR^{b}, où R^{a} et R^{b} sont identiques ou différents et représentent un atome d'hydrogène ou un radical alkyle ayant de 1 à 14 atomes de C, ou R^{a} et R^{b} peuvent former un cycle avec les atomes qui les relient, à une température de -60 à 200°C, à une pression de 0,5 à 100 bars, en solution, en suspension ou en phase gazeuse, en présence d'un catalyseur qui est constitué d'un composant métal de transition (métallocène) et d'un aluminoxane de formule II 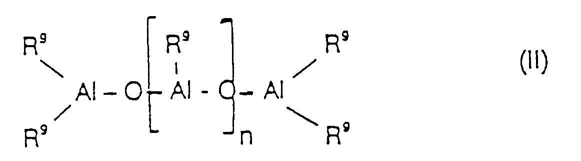 pour le type linéaire et/ou de formule III 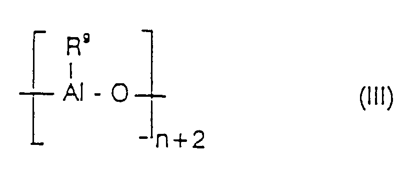 pour le type cyclique, où dans les formules II et III les radicaux R⁹ peuvent être identiques ou différents et représentent un groupe C₁-C₆-alkyle, un groupe C₁-C₆-fluoroalkyle, un groupe C₆-C₁₈-aryle, un groupe C₆-C₁₈-fluoroaryle ou l'hydrogène, et n est un nombre entier de 0 à 50, ou qui est constitué, au lieu de l'aluminoxane, par un mélange d'un aluminoxane de formule II et/ou de formule III avec un composé AlR⁹₃, le procédé étant caractérisé en ce que, comme composant métal de transition, on utilise au moins 2 métallocènes de formule I 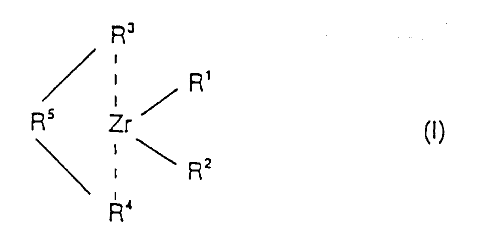 qui sont stéréorigides et dont la partie de la molécule qui est formée par Zr et par les substituants R¹-R⁴ présente une symétrie C_{S} ou une symétrie C_{S} légèrement perturbée,
R¹ et R² étant identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R³ et R⁴ sont différents et représentent un radical hydrocarboné à un ou plusieurs cycles, qui peut former avec l'atome central Zr une structure sandwich,
R⁵ représente 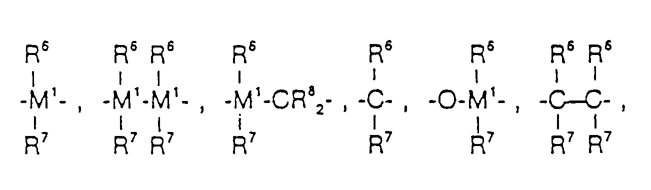 = BR⁶, = AlR⁶, -Ge-, -O-, -S-, = SO = SO₂, = NR⁶, = CO, PR⁶ ou = P(O)R⁶, R⁶, R⁷ et R⁸ étant identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R⁶ et R⁷ ou R⁶ et R⁸ forment chaque fois avec les atomes qui les lient un cycle, et M¹ représente le silicium, le germanium ou l'étain.

2. Procédé selon la revendication 1, caractérisé en ce que, dans la formule I, les substituants R¹ et R² représentent le chlore.

3. Procédé selon la revendication 1 ou 2, caractérisé en ce que l'on utilise comme métallocènes de formule I le dichlorure de (arylalkylidène)(9-fluorényl)(cyclopentadiényl)zirconium, le dichlorure de (diarylméthylène)(9-fluorényl)-(cyclopentadiényl)zirconium et/ou le dichlorure de (dialkylméthylène)(9-fluorényl)(cyclopentadiényl)zirconium.

4. Procédé selon une ou plusieurs des revendications 1 à 3, caractérisé en ce que l'on utilise comme métallocènes de formule I le dichlorure de (méthyl(phényl)méthylène)(9-fluorényl)(cyclopentadiényl)zirconium, le dichlorure de (diphénylméthylène)(9-fluorényl)(cyclopentadiényl)zirconium et/ou le dichlorure de (diméthylméthylène)(9-fluorényl)(cyclopentadiényl)zirconium.

5. Procédé selon une ou plusieurs des revendications 1 à 4, caractérisé en ce que l'on polymérise le propylène.

6. Catalyseur qui est constitué par un composant de métal de transition (métallocène) et par un aluminoxane de formule II 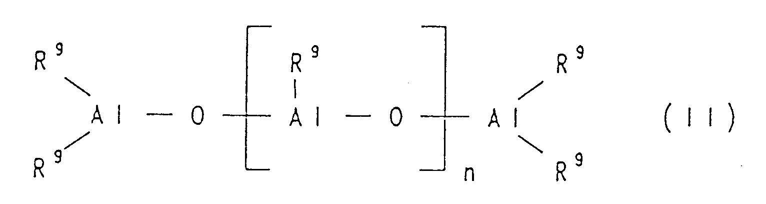 pour le type linéaire et/ou de formule III 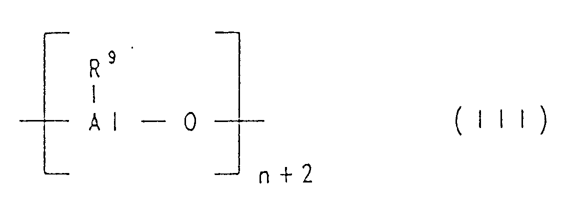 pour le type cyclique, dans les formules II et III les radicaux R⁹ pouvant être identiques ou différents et représentent un groupe C₁-C₆-alkyle, un groupe C₁-C₆-fluoroalkyle, un groupe C₆-C₁₈-aryle, un groupe C₆-C₁₈-fluoroaryle ou l'hydrogène, et n est un nombre entier de 0 à 50, ou qui est constitué, au lieu de l'aluminoxane, par un mélange d'un aluminoxane de formule II et/ou de formule III avec un composé AlR⁹₃,
ou qui comporte à la place ou en plus d'un aluminoxane un composé de type sel de formule R_{X}NH_{4-X}BR'₄ ou de formule R₃PHBR'₄, où X = 1, 2 ou 3, R = un alkyle ou un aryle, identiques ou différents et R' = un aryle qui peut être aussi fluoré ou partiellement fluoré caractérisé en ce que le composant métal de transition comporte au moins 2 métallocènes de formule I 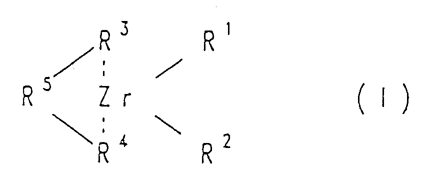 qui sont stéréorigides et dont la partie de la molécule qui est formée par Zr et par les substituants R¹-R⁴ présente une symétrie C_{S} ou une symétrie C_{S} légèrement perturbée,
R¹ et R² étant identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R³ et R⁴ sont différents et représentent un radical hydrocarboné à un ou plusieurs cycles, qui peut former avec l'atome central Zr une structure sandwich,
R⁵ représente 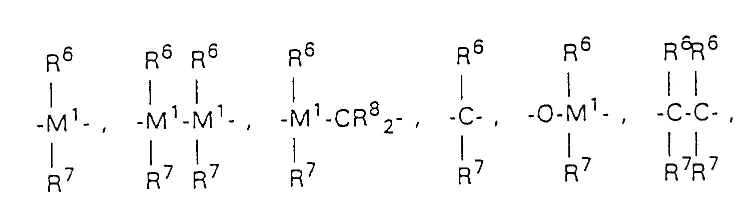 = BR⁶, = AlR⁶, -Ge-, -O-, -S-, = SO = SO₂, = NR⁶, = CO, PR⁶ ou = P(O)R⁶, R⁶, R⁷ et R⁸ étant identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R⁶ et R⁷ ou R⁶ et R⁸ forment chaque fois avec les atomes qui les relient un cycle, et M¹ représente le silicium, le germanium ou l'étain.

7. Catalyseur selon la revendication 6, caractérisé en ce que, dans la formule I, les substituants R¹ et R² représentent le chlore.

8. Catalyseur selon la revendication 6 ou 7, caractérisé en ce qu'il comporte comme métallocènes de formule I le dichlorure de (arylalkylidène)(9-fluorényl)(cyclopentadiényl)zirconium, le dichlorure de (diarylméthylène)(9-fluorényl)(cyclopentadiényl)zirconium et/ou le dichlorure de (dialkylméthylène)(9-fluorényl)(cyclopentadiényl)zirconium.

9. Catalyseur selon une ou plusieurs des revendications 6 à 8, caractérisé en ce qu'il comporte comme métallocènes de formule I le dichlorure de (méthyl(phényl)méthylène)(9-fluorényl)-(cyclopentadiényl)zirconium, le dichlorure de (diphénylméthylène) (9-fluorényl)(cyclopentadiényl)zirconium et/ou le dichlorure de (diméthylméthylène)(9-fluorényl)(cyclopentadiényl)zirconium.
